# EUROPÄISCHE PATENTSCHRIFT

(11) **EP 1 305 362 B1**
(45) Veröffentlichungstag und Bekanntmachung des Hinweises auf die Patenterteilung: **02.02.2005**
(21) Anmeldenummer: 01965019.1
(22) Anmeldetag: 21.06.2001
(51) Int. Cl.: C08K 5/00, C08L 9/02, C08G 18/00, B60C 1/00

(54) **KAUTSCHUKMISCHUNGEN MIT POLYHARNSTOFF-FÜLLSTOFFEN**
RUBBER MIXTURES COMPRISING POLYUREA FILLING MATERIALS
MELANGES DE CAOUTCHOUC CONTENANT DES CHARGES DE POLYUREE

(30) Priorität: 04.07.2000 DE 10032353
(43) Veröffentlichungstag der Anmeldung: 02.05.2003
(73) Patentinhaber: Bayer Aktiengesellschaft, 51368 Leverkusen (DE)
(72) Erfinder: SCHOLL, Thomas(Verstorben), (DE); PARG, Roland, 51373 Leverkusen (DE)
(86) Internationale Anmeldenummer: PCT/EP2001/006999
(87) Internationale Veröffentlichungsnummer: WO 2002/002683

(56) Entgegenhaltungen:
- US-A- 3 367 920
- PATENT ABSTRACTS OF JAPAN vol. 2000, no. 12, 3. Januar 2001 (2001-01-03) & JP 2000 265007 A (SUMITOMO RUBBER IND LTD), 26. September 2000 (2000-09-26) & DATABASE WPI Derwent Publications Ltd., London, GB; & JP 12 265007 A (SUMITOMO RUBBER IND LTD ), 26. September 2000 (2000-09-26)
- DATABASE CA [Online] CHEMICAL ABSTRACTS SERVICE, COLUMBUS, OHIO, US; KISHIBE, MASAYUKI: "Manufacture of reinforcing fillers for resins or rubbers" retrieved from STN Database accession no. 120:32197 XP002181352 & JP 05 140474 A (KISHIBE MASAYUKI, JAPAN) 8. Juni 1993 (1993-06-08)

## Beschreibung

Gegenstand der vorliegenden Erfindung sind Kautschukmischungen aus Kautschuk und speziellen Polyharnstoff-Füllstoffen, ein Verfahren zur Herstellung der erfindungsgemäßen Kautschukmischungen sowie die Verwendung der Kautschukmischungen zur Herstellung von Kautschukvulkanisaten und Formkörpern aller Art, insbesondere technische Gummiartikel und Reifen mit niedrigem spezifischem Gewicht und geringer dynamischer Dämpfung, sowie die Vulkanisate und Formkörper selbst.

Zur Reduktion der dynamischen Dämpfung und zur Gewichtsreduktion von Gummiartikeln sind in der Literatur eine Vielzahl von Maßnahmen beschrieben worden, u.a. auch die Verwendung von organischen Füllstoffen anstelle von Ruß, wie z.B. Kautschukgele (EP-A 405 216 und DE-A 4 220 563), Stärke (EP-A 795 581) oder Cellulosefasem (EP-A 905 186).

Reifen aus Polyharnstoff-polyurethanen beschreibt US-A 5 223 599. Die Polyharnstoff polyurethane werden hier jedoch nicht als Füllstoff sondern als Elastomer verwendet und besitzen daher naturgemäß ganz andere physikalische Eigenschaften und eine weitaus geringere Hydrolysestabilität als die Kautschuke und -vulkanisate der vorliegenden Erfindung, die keine hydrolysierbaren Kautschukketten besitzen.

Die Herstellung und Verwendung von Polyharnstoffen wird auch in Encyclopedia of Polymer Science and Engineering, John Wiley, New York 1988, Vol. 13, Seiten 212-243 beschrieben. Es ergeben sich jedoch hier keine Hinweise auf die Verwendung der speziellen Polyharnstoffe als Füllstoffe in Kautschuken.

Es wurde nun gefundenen, dass sich aus speziellen Polyharnstoffen mit einer bestimmten Teilchengröße und Kautschuken, Kautschukmischungen und -Vulkanisate mit besonders guten mechanischen und dynamischen Eigenschaften herstellen lassen, die sich hervorragend zur Herstellung von hochverstärkten Formkörpern, insbesondere Reifen und technischen Gummiartikeln, eignen.

Gegenstand der vorliegenden Erfindung sind daher Kautschukmischungen bestehend aus einem Kautschuk und aus 1 bis 300, bevorzugt 5 bis 150 Gew.-Teilen, bezogen auf 100 Gew.-Teile Kautschuk, eines Polyharnstoff-Füllstoffs mit einer Teilchengröße von 0,001 bis 500 µm, bevorzugt 0,001 bis 100 µm besonders bevorzugt 0,01 bis 20 µm, und gegebenenfalls weiteren Kautschukhilfsmitteln und Vernetzern.

Ein weiterer Gegenstand der Erfindung ist ein Verfahren zur Herstellung der Polyhamstoff-gefüllten Kautschukmischungen, das dadurch gekennzeichnet ist, dass man mindestens ein Polyisocyanat mit mindestens einem Polyamin und/oder Wasser bei Temperaturen von -100 bis 250°C, bevorzugt 20 bis 150°C, in einem Lösungsmittel unter Ausfällung des Polyharnstoffs umsetzt, den erhaltenen Polyharnstoff mit einer Lösung eines Kautschuks vermischt und das Lösungsmittel entfernt.

Bevorzugt wird das bei der Herstellung der erfindungsgemäßen Kautschukmischungen verwendete Lösungsmittel durch eine Wasserdampfdestillation entfernt.

In einer besonders bevorzugten Ausführungsform wird der Polyharnstoff durch Umsetzung eines Polyisocyanats mit einem Polyamin in einer Kautschuklösung oder in einer Emulsion aus einer Kautschuklösung und Wasser hergestellt, so dass die erfindungsgemäßen Kautschukmischungen ohne Verwendung eines zusätzlichen Lösungsmittels hergestellt werden können.

Die Polyharnstoffe werden durch Reaktion von Polyisocyanaten mit Polyaminen und/oder Wasser hergestellt und besitzen die oben genannten Teilchengrößen sowie Schmelz- bzw. Zersetzungspunkte von ≥150°C, bevorzugt ≥180°C, besonders bevorzugt ≥200°C. Ihre Glastemperaturen liegen, sofern vorhanden, oberhalb von 50°C, bevorzugt oberhalb von 100°C.

Geeignete Polyisocyanate zur Herstellung der Polyharnstoffe sind z.B. Hexamethylendiisocyanat (HDI), Toluoldiisocyanat (TDI), 2,2'-, 2,4'- und 4.4'-Diisocyanatodiphenylmethan (MDI), Polymethylen-polyphenylisocyanat (PMDI), Naphthalindiisocyanat (NDI), I,6-Diisocyanato-2,2,4-trimethylhexan, Isophorondiisocyanat (3-(Isocyanato-methyl)-3,5,5-trimethylcyclohexylisocyanat, IPDI), Tris-(4-isocyanato-phenyl)-methan, Phosphorsäure-tris-(4-isocyanato-phenylester), Thiophosphorsäure-tris-(4-isocyanato-phenylester) sowie Oligomerisierungsprodukte, die durch Reaktion der genannten niedermolekularen Diisocyanate mit Diolen oder Polyalkoholen, insbesondere Ethylenglykol, 1.4-Butandiol, 1.6-Hexandiol, Trimethylolpropan, Penterythrit erhalten wurden, und einen Restgehalt an freien Isocyanatgruppen besitzen. Ferner Oligomerisierungsprodukte, die durch Reaktion der genannten niedermolekularen Diisocyanate mit hydroxygruppenhaltigen Polyestern, wie z.B. Polyestern auf Basis Adipinsäure und Butandiol und Hexandiol mit Molgewichten von 400 bis 3.000, oder durch Reaktion mit hydroxygruppenhaltigen Polyether, wie Polyethylengykolen, Polypropylenglykolen, Polytetrahydrofuranen mit Molgewichten von 150 bis 3.000, erhalten wurden und einen Restgehalt an freien Isocyanatgruppen besitzen, ferner Oligomerisierungsprodukte, die durch Reaktion der genannten niedermolekularen Diisocyanate mit Wasser oder durch Dimerisierung oder Trimerisierung, wie z.B. dimerisiertes Toluoldiisocyanat (Desmodur TT) und trimerisiertes Toluoldiisocyanat, Isocyanatgruppen-haltige aliphatische Polyuretdione, z.B. auf Isophorondiisocyanatbasis erhalten wurden und einen Restgehalt an freien Isocyanatgruppen besitzen. Bevorzugte Gehalte an freien Isocyanatgruppen liegen bei 2,5 bis 50 Gew.-%, bevorzugt 10 bis 50 Gew.-%, besonders bevorzugt 15 bis 50 Gew.-%. Derartige Polyisocyanate sind bekannt und im Handel erhältlich. Siehe hierzu Houben-Weyl, Methoden der Organischen Chemie, Band XIV, Seiten 56-98, Georg Thieme Verlag Stuttgart 1963, Encyclopedia of Chem. Technol., John Wiley 1984, Vol 13, Seiten 789-818, Ullmann's Encyclopedia of Industrial chemistry, VCH, Weinheim, 1989, Vol. A 14, Seiten 611-625, sowie die Handelsprodukte der Desmodur- und Crelan-Reihe (Bayer AG).

Geeignete Polyisocyanate sind auch blockierte Polyisocyanate, die unter den genannten Reaktionsbedingungen mit den Polyaminen reagieren können. Hierunter fallen alle bereits genannten Polyisocyanate, wobei die Isocyanatgruppen jeweils mit geeigneten Abspaltergruppen blockiert sind, die bei höherer Temperatur wieder abspalten und die Isocyanatgruppen wieder freisetzen. Geeignete Abspaltergruppen sind insbesondere Caprolactam, Malonsäureester, Phenol und Alkylphenole, wie z.B. Nonylphenol sowie Imidazol und Natriumhydrogensulfit. Besonders bevorzugt sind Caprolactam-, Malonester und Alkylphenol-blockierte Polyisocyanate, insbesondere auf Basis Toluoldiisocyanat oder trimerisiertem Toluoldiisocyanat. Bevorzugte Gehalte an blockierten Isocyanatgruppen liegen bei 2,5 bis 30 %. Derartige blockierte Polyisocyanate sind bekannt und im Handel erhältlich. Siehe hierzu Houben-Weyl, Methoden der Organischen Chemie, Band XIV, Seiten 56-98, Georg Thieme Verlag Stuttgart 1963, sowie die Handelsprodukte der Desniodur-und Crelan-Reihe (Bayer AG).

Bevorzugte Polyisocyanate sind Hexamethylendiisocyanat (HDI), Toluoldiisocyanat (TDI), 2,4'- und 4.4' -Diisocyanatodiphenylmethan (MDI), Polymethylen-polyphenylisocyanat (PMDI), 1,6-Diisocyanato-2,2,4-trimethylhexan, Isophorondiisocyanat (IPDI), und Oligomerisierungsprodukte, die durch Reaktion der genannten niedermolekularen Diisocyanate mit Wasser oder mit Diolen oder Polyalkoholen, insbesondere Ethylenglykol, 1.4-Butandiol, 1.6-Hexandiol, Trimethylolpropan sowie Penterythrit, erhalten wurden und einen Restgehalt an freien Isocyanatgruppen besitzen, sowie Oligomerisierungsprodukte, die durch Dimerisierung oder Trimerisierung, wie dimerisiertes Toluoldiisocyanat (Desmodur TT) und trimerisiertes Toluoldiisocyanat, Isocyanatgruppen-haltige aliphatische Polyuretdione, z.B. auf Isophorondiisocyanatbasis, erhalten wurden und einen Gehalt an freien Isocyanatgruppen von 2,5 bis 50 Gew.-%, bevorzugt 10 bis 50 Gew.-%, besonders bevorzugt 15 bis 50 Gew.-%, besitzen.

Ganz besonders bevorzugt werden 2,4'- und 4.4'-Diisocyanatodiphenylmethan (MDI) und Polymethylen-polyphenylisocyanat (PMDI).

Geeignete Polyamine sind aliphatische Di- und Polyamine, wie Hydrazin, Ethylendiamin, 1,2-Propylendiamin, 1,3-Propylendiamin, 1-Amino-3-methylaminopropan, 1,4-Diaminobutan, N,N'-DimethyI-ethyIendiamin, 1,6-Diaminohexan, 1,12-Diaminododecan, 2,5-Diamino-2,5-dimethylhexan, Trimethyl-1,6-hexan-diamin, Diethylentriamin, N,N',N"-Trimethyldiethylentriamin, Triethylentetramin, Tetraethylenpentamin, Pentaethylenhexamin, Polyethylenimin mit Molgewichten zwischen 250 und 10.000, Dipropylentriamin, Tripropylentetramin, Bis-(3-aminopropyl)-amin, Bis-(3-aminopropyl)-methylamin, Piperazin, 1,4-Diaminocyclohexan, Isophorondiamin, N-Cyclohexyl-1,3-propandiamin, Bis-(4-amino-cyclohexyl)-methan, Bis-(4-amino-3-methyl-cyclohexyl)-methan, Bis-aminomethyl-tricyclodecan (TCD-Diamin), o-, m- und p-Phenylendiamin, 1,2-Diamino-3-methylbenzol, 1,3-Diamino-4-methylbenzol (2,4-Diaminotoluol), 1,3-Bisaminomethyl-4,6-dimethylbenzol, 2,4- und 2,6-Diamino-3,5-diethyltoluol, 1,4- und 1,6-Diaminonaphthalin, 1,8- und 2,7 Diaminonaphthalia, Bis-(4-amino-phenyl)-methan, Polymethylen-polyphenylamin 2,2-Bis-(4-aminophenyl)-propan, 4,4'-Oxibisanilin, 1,4-Butandiol-bis-(3-aminopropylether), hydroxylgruppenhaltige Polyamine, wie 2-(2-Aminoethylamino)-ethanol, carboxylgruppenhaltige Polyamine, wie 2,6-Diamino-hexansäure. Ferner aminogruppenhaltige flüssige Polybutadiene oder Acrylnitril/Butadien-Copolymere mit mittleren Molgewichten bevorzugt zwischen 500 und 10.000 und aminogruppenhaltige Polyether z.B. auf Basis von Polyethylenoxid, Polypropylenoxid oder Polytetrahydrofuran mit einem Gehalt an primären oder sekundären Aminogruppen von 0,25 bis ca. 8 mmol/g, bevorzugt 1 bis 8 mmol/g. Derartige aminogruppenhaltige Polyether sind im Handel erhältlich (z.B Jeffamin D-400, D-2000, DU-700, ED-600, T-403 und T-3000 der Texaco Chem. Co.).

Besonders bevorzugte Polyamine sind Hydrazin, Ethylendiamin, 1,2-Propylendiamin, 1,3-Propylendiamin, 1-Amino-3-methylaminopropan, 1,4-Diaminobutan, N,N'-Dimethyl-ethylendiamin, 1,6-Diaminohexan, Diethylentriamin, N,N',N"-Trimethyldiethylentriamin, Triethylentetramin, Tetraethylenpentamin, Pentaethylenhexamin, Polyethylenimin mit Molgewichten zwischen 250 und 10.000, Dipropylentriamin, Tripropylentetramin, Isophorondiamin, 2,4-Diaminotoluol und 2,6-Diaminotoluol, Bis-(4-amino-phenyl)-methan, Polymethylen-polyphenylamin sowie aminogruppenhaltige flüssige Polybutadiene oder Acrylnitril/Butadien-Copolymere mit mittleren Molgewichten bevorzugt zwischen 500 und 10.000 aminogruppenhaltige Polyether z.B. auf Basis von Polyethylenoxid, Polypropylenoxid mit einem Gehalt an primären oder sekundären Aminogruppen von 1 bis 8 mmol/g.

Ganz besonders bevorzugte Polyamine sind Ethylendiamin, 1,2-Propylendiamin, 1,3-Propylendiamin, Diethylentriamin, Triethylentetramin, Tetraethylenpentamin, Pentaethylenhexamin, Polyethylenimin mit Molgewichten zwischen 250 und 10.000, 2,4-Diaminotoluol und 2,6-Diaminotoluol, Bis-(4-amino-phenyl)-methan sowie Polymethylen-polyphenylamin sowie aminogruppenhaltige Polyether, z.B. auf Basis von Polyethylenoxid, Polypropylenoxid, mit einem Gehalt an primären oder sekundären Aminogruppen von 1 bis 8 mmol/g und Molgewichten zwischen 250 und 2000.

Zusätzlich zu den Polyaminen können noch weitere gegenüber den Polyisocyanaten reaktive Verbindungen zugesetzt werden, insbesondere Monoamine, wie Ammoniak, C₁ bis C₁₈-Alkyl-amine und Di-(C₁ bis C₁₈-Alkyl)-amine, sowie Arylamine, wie Anilin, C₁-C₁₂-Alkylaryl-amine, und aliphatische, cycloaliphatische oder aromatische Mono-, Di- oder Poly-C₁- bis C₁₈-Alkohole, aliphatische, cycloaliphatische oder aromatische Mono-, Di- oder C₁ bis C₁₈-Carbonsäuren, Aminosilane, wie 3-Aminopropyltrimethoxysilan und 3-Aminopropyltriethoxysilan, sowie carboxyl-, epoxyoder hydroxyl-gruppenhaltige flüssige Polybutadiene oder Acrylnitril/Butadien-Copolymere mit mittleren Molgewichten bevorzugt zwischen 500 und 10.000 und Polyether und Polyester mit Molgewichten zwischen 200 bis 10.000, die gegenüber den Polyisocyanaten reaktive Hydroxyl- und/oder Carboxylgruppen besitzen, eingesetzt werden. Beispiel für diese zusätzlich zu verwendenden Monomamine sind Ammoniak, Methylamin, Dimethylamin, Dodecylamin, Octadecylamin, Oleylamin, Ethanolamin, Diethanolamin, beta-Alanin oder Aminocapronsäure. Die Menge dieser zusätzlichen Amine, Alkohole, Carbonsäuren, hydroxyl- und/oder carboxylgruppenhaltiger Polyether und Polyester hängt von deren Gehalt an gegenüber den Polyisocyanaten reaktiven Gruppen ab und liegt bei 0 bis 0,5 mol reaktive Gruppe pro Isocyanat-Äquivalent.

Die erfindungsgemäßen Polyharnstoff-Füllstoffe können - wie erwähnt - durch Umsetzung von mindestens einem Polyisocyanat mit mindestens einem Polyamin und/oder Wasser bei Temperaturen von -100 bis 250°C, bevorzugt 20 bis 150°C, in einem Lösungsmittel unter Ausfällung des Polyharnstoffs hergestellt werden. Bevorzugte Lösungsmittel sind neben Wasser aprotische Lösungsmittel, insbesondere Kohlenwasserstoffe, wie Butan, Pentan, n-Hexan, Cyclohexan, n-Octan, Isooctan, Benzol, Toluol, Xylol und/oder Chlorbenzol.

In getrocknetem Zustand kann der Polyharnstoff-Füllstoff in aggregierter Form vorliegen. Die Aggregate lassen sich durch mechanische Bearbeitung, z.B. durch Mahlung, zerstören. Die Teilchengröße lässt sich beispielsweise durch Elektronenmikroskopie, Lichtstreuung oder Ultrazentrifuge ermitteln.

Ein besonders günstiges Verfahren zur Herstellung der Polyharnstoff-gefüllten Kautschukmischungen ist dadurch gekennzeichnet, dass man mindestens ein Polyisocyanat mit mindestens einem Polyamin und/oder Wasser in einem Lösungsmittel unter Ausfällung des Polyharnstoffs umsetzt, mit einer Lösung eines Kautschuks vermischt und das Lösungsmittel entfernt. Bevorzugt wird die Herstellung und Ausfällung des Polyharnstoff-Füllstoffs direkt in der Kautschuklösung durchgeführt. Dieses Verfahren hat den Vorteil, dass die Polyharnstoff-Füllstoffe sofort in der gewünschten Teilchengröße anfallen.

Der Gehalt an Kautschuk in der Lösung kann hierbei in weiten Grenzen variiert werden und liegt in der Regel bei 1 bis 50 Gew.-%, bevorzugt 5 bis 30 Gew.-%. Aus ökonomischen Gründen werden möglichst hohe Gehalte an Kautschuk in der Lösung bevorzugt.

Die Umsetzung von Polyisocyanat mit Polyamin wird bevorzugt so durchgeführt, dass man das Polyisocyanat in dem Lösungsmittel oder einer Emulsion aus dem Lösungsmittel und Wasser vorlegt und anschließend Polyamin hinzumischt, oder indem man das Polyamin in dem Lösungsmittel oder einer Emulsion aus dem Lösungsmittel und Wasser vorlegt und das Polyisocyanat hinzumischt und mit der Kautschuklösung vermischt. In einer besonders bevorzugten Ausführungsform wird die Umsetzung in der Kautschuklösung oder in einer Emulsion aus der Kautschuklösung und Wasser durchgeführt. Die Mengen an Polyisocyanat, Polyamin und gegebenenfalls Wasser richten sich nach dem gewünschten Füllgrad der resultierenden Kautschukmischung und nach den gewünschten Eigenschaften des Polyharnstoff-Füllstoffs, der durch Einsatz eines Überschusses an Polyamin beispielsweise noch gebundene Aminogruppen enthält, oder bei Einsatz eines Überschusses von Polyisocyanat noch gebundene Isocyanatgruppen enthält.

Bevorzugte Mengen-Verhältnisse von Polyisocyanat und Polyamin liegen bei 0,7 bis 1,3, insbesondere 0,8 bis 1,2 Mol Isocyanatgruppe pro Mol Aminogruppe. Wasser kann gegebenenfalls in großem Überschuß sowohl als Lösungs- bzw. Emulgiermittel als auch zur Reaktion eingesetzt werden, da es mit der Isocyanatgruppe unter Bildung von Aminogruppen reagieren kann, die anschließend mit den restliche Isocyanatgruppen abreagieren.

Zur Steuerung der Polyharnstoff-Teilchengröße können vor oder während des Herstellungspozesses Emulgatoren und Dispergiermittel zugegeben werden. Als geeignete Emulgatoren und Dispergiermittel sind solche mit anionischer, kationischer oder nichtionischer Natur, wie Dodecylbenzolsulfonsäure-Na-Salz, Dioctylsulfosuccinat, Naphthalinsulfonsäure-Na-Salz, Triethylbenzylammoniumchlorid oder Polyethylenoxidether, wie Umsetzungsprodukte von Nonylphenol mit 3 bis 50 Mol Ethylenoxid pro Mol Nonylphenol. Die Mengen an Emulgatoren oder Dispergiermittel betragen ca. 0,1 bis 5 Gew.-%, bezogen auf Gesamtmenge an Polyharnstoff.

Die Reaktionszeiten bei den erfindungsgemäßen Verfahren liegen zwischen wenigen Sekunden bis zu mehreren Stunden.

Die Kautschuk-Lösung kann vor, während oder nach der Erzeugung des Polyharnstoff-Füllstoffs neben dem Kautschuk noch Füllstoffe, insbesondere Ruß und/oder Kieselsäure, sowie Kautschukhilfsmittel, wie Mineralöle, Pigmente und Stabilisatoren enthalten. Bevorzugte Mengen an Rußen sind 0,1 bis 100 Gew.-Teile, an Mineralölen 0,1 bis 50 Gew.-Teile und an Stabilisatoren 0,1 bis 3 Gew.-Teile, jeweils bezogen auf 100 Gew.-Teile Kautschuk.

Zur Herstellung der erfindungsgemäßen Kautschukmischungen mit Polyharnstoff-Füllstoffen eignen sich sowohl Naturkautschuk als auch Synthesekautschuke.

Bevorzugte Synthesekautschuke sind beispielsweise bei W. Hofmann, Kautschuktechnologie, Gentner Verlag, Stuttgart 1980 und I. Franta, Elastomers and Rubber Coumpounding Materials, Elsevier, Amsterdam 1989 beschrieben. Sie umfassen u.a.
- ACM: Polyacrylatkautschuk und Ethylen/Acrylsäure-C₁₋₄-alkylester-Copolymere
- BR: Polybutadien
- ABR: Butadien/Acrylsäure-C1-4-alkylester-Copolymere
- CR: Polychloropren
- IR: Polyisopren
- SBR: Styrol/Butadien-Copolymerisate mit Styrolgehalten von 1-60, vorzugsweise 20-50 Gew.-% und gegebenenfalls 0 bis 10 Gew.-% polaren ungesättigten Monomeren wie (Meth-)Acrylsäure, Hydroxiethyl-(meth-)-acrylat, Acrylnitril oder Vinylpyridin
- IIR: Isobutylen/Isopren-Copolymerisate mit Isoprengehalten von 0,01 bis 5 Gew.-% (Butylkautschuk)
- BR-IIR: Bromierte Isobutylen-Copolymerisate mit Bromgehalten zwischen 0,01 und 4 Gew.-% (Brombutylkautschuk)
- Cl-IIR: Chlorierte Isobutylen-Copolymerisate mit Chlorgehalten zwischen 0,01 und 4 Gew.-% (Chlorbutylkautschuk)
- IMS: Isobutylen / p-Methylstyrol-Copolymerisate.
- BIMS: bromierte Copolymerisate mit 0,05 bis 3 Mol-% benzylisch gebundenem Brom
- NBR: Butadien/Acrylnitril-Copolymere mit Acrylnitrilgehalten von 5-60, vorzugsweise 10-40 Gew.-% und gegebenenfalls 0 bis 10 Gew.-% weiteren polaren ungesättigten Monomeren, wie (Meth-) Acrylsäure, Hydroxiethyl-(meth-)-acrylat oder Vinylpyridin.
- HNBR: teilhydrierter oder vollständig hydrierter NBR-Kautschuk mit Acrylnitrilgehalten von 5 - 60, vorzugsweise 10 - 50 Gew. % und Restdoppelbindungsgehalten von 0 - 20 %, bevorzugt 0 - 10 %.
- EPM: Ethylen/Propylen-Copolymerisate
- EPDM: Ethylen/Propylen/Dien-Copolymerisate, mit Diengehalten zwischen 0,1 bis 20 Gew.-%, vorzugsweise 0,5 bis 10 Gew.-%
- FKM: Fluorkautschuk
- CO: Polyepichlorhydrin
- ECO: Copolymere von Epichlorhydrin und Ethylenoxid
- EAM: Ethylen/Vinylacetat-Copolymere mit Vinylacetatgehalten von 20 bis 90 Gew.-%, vorzugsweise 40 bis 80 Gew.-%
sowie Mischungen dieser Kautschuke.

Für die Herstellung von technischen Gummiartikeln werden doppelbindungsarme und doppelbindungsfreie Kautschuke mit einem C=C-Doppelbindungsgehalt von 0 bis 10 Gew.-% bevorzugt, insbesondere Polyacrylatkautschuk und Ethylen/Acrylsäure-C₁₋₄-alkylester-Copolymere, Butylkautschuk, Brombutyl, Chlorbutylkautschuk, teilhydrierter oder vollständig hydrierter NBR-Kautschuk, Ethyleri/Propylen/Dien-Copolymerisate und Ethylen/Vinylacetat-Copolymere.

Ganz besonders bevorzugt werden vollständig- und teilhydrierte NBR-Kautschuke (HNBR): Den bevorzugten (teil-) hydrierten Nitrilkautschuken liegen Butadien/Acrylnitril-Copolymerisate mit einem Gehalt an copolymerisiertem Acrylnitril von 5 bis 60, vorzugsweise 10 bis 50 Gew.-% zugrunde. "Hydriert" bedeutet in diesem Zusammenhang, dass 90 bis 100 %, insbesondere 95 bis 99,5 % der hydrierbaren C=C-Doppelbindungen hydriert sind. Der Hydriergrad kann IRspektroskopisch bestimmt werden. Die Hydrierung von Nitrilkautschuk ist bekannt (z.B. US-PS 3 700 637, DE-OS 25 39 132, 30 46 008, 30 46 251, 32 27 650, 33 29 974, EP-A 111 412, FR-PS 2540503). Geeignete (teil-)hydrierte Nitrilkautschuke besitzen Mooney-Viskositäten ML 1+4 (100° C) von 10 bis 200, bevorzugt 20 bis 100. Derartige HNBR-Kautschuke sind bekannt und im Handel erhältlich (z.B. THERBAN® der Bayer AG).

Bevorzugte Kautschuke besitzen Molekulargewichte zwischen 100.000 und 2.000.000, insbesondere 150.000 bis 1.500.000. (bestimmt mittels Gelpermeationschromatographie, GPC)

Neben den Polyharnstoff-Füllstoffen können die erfindungsgemäßen Kautschukmischungen noch weitere Füllstoffe enthalten. Als weitere Füllstoffe kommen für die erfindungsgemäßen Kautschukmischungen alle bekannten in der Kautschukindustrie verwendeten Füllstoffe in Betracht, diese umfassend sowohl aktive als auch inaktive Füllstoffe.

Zu erwähnen sind:
- hochdisperse Kieselsäuren, hergestellt z.B. durch Fällung von Lösungen von Silikaten oder Flammenhydrolyse von Siliciumhalogeniden mit spezifischen Oberflächen von 5 - 1000, vorzugsweise 20-400 m²/g (BET-Oberfläche) und mit Primärteilchengrößen von 10-400 nm. Die Kieselsäuren können gegebenenfalls auch als Mischoxide mit anderen Metalloxiden, wie Al-, Mg-, Ca-, Ba-, Zn-, Zr-, Ti-oxiden vorliegen;
- synthetische Silikate, wie Aluminiumsilikat, Erdalkalisilikat wie Magnesiumsilikat oder Calciumsilikat, mit BET-Oberflächen von 20-400 m²/g und Primärteilchendurchmessern von 10-400 nm;
- natürliche Silikate, wie Kaolin und andere natürlich vorkommende Kieselsäure;
- Glasfasern und Glasfaserprodukte (Matten, Stränge) oder Mikroglaskugeln;
- Metalloxide, wie Zinkoxid, Calciumoxid, Magnesiumoxid, Aluminiumoxid;
- Metallcarbonate, wie Magnesiumcarbonat, Calciumcarbonat, Zinkcarbonat;
- Metallhydroxide, wie z.B. Aluminiumhydroxid, Magnesiumhydroxid;
- Ruße. Die hierbei zu verwendenden Russe sind nach dem Flammruß, Fumace- oder Gasrußverfahren hergestellt und besitzen BET-Oberflächen von 20 bis 200 m²/g, z.B. SAF-, ISAF-, HAF-, FEF- oder GPF-Ruße.

Bevorzugt werden als zusätzliche Füllstoffe hochdisperse Kieselsäuren und/oder Ruße eingesetzt, wobei das Mischungsverhältnis von Polyharnstoff-Füllstoff zu Ruß und/oder Kieselsäure, bei 1:0,05 bis 30, besonders bevorzugt bei 1:0,1 bis 10 liegt.

Die erfindungsgemäßen Kautschukmischungen können darüber hinaus noch andere Kautschukhilfsmittel enthalten, die beispielsweise der Vernetzung der Kautschukmischungen dienen, oder die die physikalischen Eigenschaften der aus den erfindungsgemäßen Kautschukmischungen hergestellten Vulkanisate für deren speziellen Einsatzzweck verbessern.

Als Vernetzeragentien werden bevorzugt Schwefel oder Schwefel-liefernde Verbindungen, methylolgruppenhaltige Verbindungen, Metalloxide oder Peroxide eingesetzt in Mengen von 0,01 bis 20 Gew.-Teilen, bezogen auf 100 Gew.-Teile Kautschuk. Darüber hinaus können, wie erwähnt, die erfindungsgemäßen Kautschukmischungen weitere Hilfsmittel, wie die bekannten Reaktionsbeschleuniger, Covemetzer, insbesondere Polyacrylate, Polyallylether und Polymaleinimide, wie z.B. Trimethylolpropantriacylat, Triallylisocyanurat oder m-Phenylen-bis-maleinimid, Alterungsschutzmittel, Wärmestabilisatoren, Lichtschutzmittel, Ozonschutzmittel, Verarbeitungshilfsmittel, Verstärkerharze, z.B. Phenolharze, Stahlcord-Haftmittel, wie Kieselsäure/Resorcin/Hexamethylentetramin oder Cobalt-Naphtenat, Weichmacher, Tackifier, Treibmittel, Farbstoffe, Pigmente, Wachse, Streckmittel, organische Säuren, Verzögerer, Metalloxide sowie Füllstoffak-tivatoren, z.B. polysulfidische Silane, wie Bis-(triethoxisilylpropyl)-tetrasulfid, enthalten.

Die erfindungsgemäßen Kautschukhilfsmittel werden in den üblichen, bekannten Mengen eingesetzt, wobei sich die eingesetzte Menge nach dem späteren Verwendungszweck der Kautschukmischungen richtet. Üblich sind beispielsweise Mengen an Kautschukhilfsmitteln im Bereich von 2 bis 70 Gew.-Teilen, bezogen auf 100 Gew.-Teile Kautschuk.

Die erfindungsgemäßen Kautschukmischungen können auch hergestellt werden durch Abmischung der Kautschuke mit den separat hergestellten Polyharnstoff-Füllstoffen und gegebenenfalls weiteren Füllstoffen, Kautschukhilfsmitteln und Vernetzem in geeigneten Mischapparaturen, wie Knetern, Walzen oder Extrudern. Ganz besonders bevorzugt erfolgt die Herstellung der Kautschuk-Polyharnstoff-Mischung nach dem erfindungsgemäßen Herstellungsverfahren aus der Kautschuk-Lösung.

Ein weiterer Gegenstand der vorliegenden Erfindung ist die Verwendung der erfindungsgemäßen Kautschukmischungen zur Herstellung von Vulkanisaten und hochverstärkten Kautschuk-Formkörpern, bevorzugt für die Herstellung von technischen Gummiartikeln aus EPDM-Kautschuk, Butylkautschuk, Halobutylkautschuk und hydriertem Acrylnitril/Butadienkautschuk, und für rollwiderstandsarme Reifenlaufflächen, insbesondere solche auf Basis BR, IR, NR oder SBR-Kautschuken, dämpfungsarmen Reifenseitenwänden für Reifen mit Notlaufeigenschaften, wie in USA 5 368 082, 5 427 166, 5 511 599 sowie EP-A 475 258 beschrieben, sowie gasdichten und dämpfungsarmen Reifen-Innerliner, insbesondere solche auf Butyl-, Brombutyloder Chlorbutylkautschukbasis.

Bevorzugt werden die Kautschukmischungen zur Herstellung von Reifen und technischen Gummiartikeln verwendet.

Ein zusätzlicher Gegenstand der vorliegenden Erfindung sind Kautschukvulkanisate, Kautschuk-formkörper aller Art, insbesondere Reifen und technische Gummiartikel, die unter Einsatz der erfindungsgemäßen Kautschukmischungen in üblicher Weise hergestellt werden.

### Beispiele:

### Beispiel 1: Mischung aus hydriertem NBR-Kautschuk und 25 phr Polyharnstoff auf Polymethylen-polyphenylisocyanat-Basis und Ethylendiamin

Eine Lösung von 500 g HNBR-Kautschuk Therban A 3406 (HNBR mit 34 % Acrylnitrilgehalt, Restdoppelbindungsgehalt < 0,9 %, Bayer AG) in 4 1 Chlorbenzol wurde mit 102,1 g Desmodur 44V20 L (Gemisch von Diphenylmethandiisocyanat mit Isomeren und höherfunktionellen Homologen, NCO-Gehalt 31,5 %, Viskosität 200 mPa.s, Hersteller: Bayer AG) versetzt. Dann tropfte man zu diesem Gemisch bei Raumtemperatur unter Rühren (200 UpM) innerhalb von 25 Minuten eine Lösung von 23,0 g Ethylendiamin in 100 ml Chlorbenzol hinzu und rührte 1 Stunde bei 100°C nach. Es entstand eine feinteilige weiße Dispersion mit einer Teilchengröße zwischen 0,5 bis 10 µm (bestimmt mittels Lichtmikroskop). Dann destillierte man das Lösungsmittel mit Wasserdampf ab. Nach dem Trocknen bei 125°C im Vakuum erhielt man 624 g HNBR-Kautschukmischung mit 25 phr Polyharnstoff-Füllstoff und einer Viskosität ML 1+4 (100°C) 109. Der Polyharnstoff-Füllstoff besaß einen Schmelz- bzw. Zersetzungspunkt >230°C (nach DSC). Die Glastemperatur der Kautschukmischung lag bei -25°C, der Polyharnstoff-Füllstoff besaß keine Glastemperatur.

### Beispiel 2: Mischung aus hydriertem NBR-Kautschuk und 25 phr Polyharnstoff aus Toluylendiisocyanat und Ethylendiamin.

Es wurde wie in Beispiel 1 verfahren, wobei 500 g des gleichen Kautschuks, als Polyisocyanat-Komponente 93,1 g Toluylendiisocyanat Desmodur T 80 (Bayer AG) und als Polyamin Komponente 32,1 g Ethylendiamin verwendet wurden. Man erhielt 625 g HNBR-Kautschukmischung mit 25 phr Polyharnstoff Füllstoff und einer Viskosität ML 1+4 (100°C) 114. Der Polyharnstoff-Füllstoff besaß einen Schmelz- bzw. Zersetzungspunkt >250°C (nach DSC). Die Glastemperatur der Kautschukmischung lag bei -25° C, der Polyharnstoff-Füllstoff besaß keine Glastemperatur.

### Beispiel 3: Mischung aus hydriertem NBR-Kautschuk und 25 phr Polyharnstoff aus Polymethylen-polyphenylisocyanat, Ethylendiamin und aminogruppenhaltigem NBR-Öl

Eine Lösung von 500 g HNBR-Kautschuk Therban A 3406 (HNBR mit 34 % Acrylnitrilgehalt, Restdoppelbindungsgehalt < 0,9 %, Bayer AG) in 41 Chlorbenzol wurde mit 92,0 g Desmodur 44V20 L (Gemisch von Diphenylmethandiisocyanat mit Isomeren und höherfunktionellen Homologen, NCO-Gehalt 31,5 %, Viskosität 200 mPa.s, Hersteller: Bayer AG) versetzt. Dann tropfte man zu diesem Gemisch bei Raumtemperatur unter Rühren (200 UpM) innerhalb von 25 Minuten eine Lösung von 20,7 g Ethylendiamin und 12,5 g amino-termiertem flüssigen Acrylnitril/Butadien-Copoymer (18 Gew. % Acrylnitril, Amin-Äquivalent 900) in 100 ml Chlorbenzol hinzu und rührte 1 Stunde bei 100°C nach. Es entstand eine feinteilige weiße Dispersion mit einer Teilchengröße zwischen 0,5 bis 5 µm (bestimmt mittels Lichtmikroskop). Dann destillierte man das Lösungsmittel mit Wasserdampf ab. Nach dem Trocknen bei 125°C im Vakuum erhielt man 687 g HNBR-Kautschukmischung mit 37,5 phr Polyharnstoff-Füllstoff und einer Viskosität ML 1+4 (100°C) 120. Der Polyharnstoff-Füllstoff besaß einen Schmelz- bzw. Zersetzungspunkt >230°C (nach DSC). Die Glastemperatur der Kautschukmischung lag bei -26° C.

### Beispiel 4: Mischung aus Brombutylkautschuk und 50 phr Polyharnstoff-Füllstoff auf TDI-Basis

Eine Lösung von 500 g Brombutylkautschuk Polysar Brombutyl X2 (1,8 Gew.-% Bromgehalt, mittleres Molgewicht (Gewichtsmittel) nach GPC: 350.000, Bayer AG) in 4 1 Cyclohexan wurde mit 186,2 g Desmodur T 80 (Toluylen-2,4/2,6-diisocyanat-Gemisch (80:20) der Bayer AG) versetzt. Dann wurden unter Rühren (200 UpM) bei Raumtemperatur in 15 Minuten 64,2 g Ethylendiamin zudosiert und eine Stunde bei 80°C nachgerührt. Es entstand eine homogene Dispersion von Polyharnstoff-Teilchen mit einem Teilchendurchmesser zwischen 0,1 bis 10 µm, davon 50 % der Teilchen ≤0,8 µm (gemessen mittels Ultrazentrifuge). Daraufhin wurden 2,5 g Antioxidant Vulkanox 4020 (Bayer AG) eingerührt. Anschließend wurde das Lösungsmittel mit Wasserdampf (105°C) abdestilliert. Nach dem Trocknen bei 70°C im Vakuum erhielt man 746 g homogene Polyharnstoff-gefüllte Brombutyl-Kautschukmischung mit der Viskosität ML 1+4 (100°C) 131. Der Polyharnstoff-Füllstoff besitzt einen Schmelz- bzw. Zersetzungspunkt >240°C (nach TGA, Aufheizung 20 K/Min.). Die Glastemperatur der Kautschukmischung lag bei -64°C, der Polyharnstoff-Füllstoff besaß keine Glastemperatur.

### Vergleichsbeispiel 1: Polyharnstoff auf Polymethylen-polyphenyl-isocyanat-Basis und Ethylendiamin mit Teilchengröße 500 - 2000 µm

Zu einer Lösung von 459,6 g Desmodur 44V20 L (Gemisch von Diphenylmethandiisocyanat mit Isomeren und höherfunktionellen Homologen, NCO-Gehalt 31,5 %, Viskosität 200 mPa.s, Hersteller: Bayer AG) in 4 l Chlorbenzol wurde bei Raumtemperatur unter Rühren (200 UpM) innerhalb von 20 Minuten 103,5 g Ethylendiamin zugetropft und anschließend 1 Stunde zum Rückfluss erhitzt. Anschließend wurde der ausgefallene Feststoff abfiltriert, im Vakuum getrocknet und durch ein Sieb mit 2000 µm Maschenweite gesiebt. Feinanteile unter 500 µm wurden zum Schluss über ein Sieb mit 500 µm Maschenweite entfernt. Der Polyharnstoff-Füllstoff besaß einen Schmelz- bzw. Zersetzungspunkt >230°C (nach DSC) und eine Teilchengröße zwischen 500 und 2000 µm.

### Beispiel 5 Kautschukvulkanisate

Die folgenden Kautschukmischungen wurden in einem 1,5 l Kneter hergestellt. Drehzahl 50 UpM, Mischdauer 5 Minuten, Starttemperatur 50° C. Das Peroxid (Bis-(tert.butyl-peroxiisopropyl)benzol) wurde zum Schluss auf einer Walze (Walzentemperatur: 20° C) zugemischt.

| | **Vergleich 5-A** | **Vergleich 5-B** | **Beispiel 5.1** |
|---|---|---|---|
| *im Kneter gemischt:* | | | |
| HNBR-Kautschuk Therban 3406 (Bayer AG) | 100 | 100 | 0 |
| HNBR / Polyharnstoff-Mischung gemäß Beispiel 1 | 0 | 0 | 125 |
| Ruß Corax N 550 (DegussaHüls AG) | 25 | 0 | 0 |
| Polyharnstoff mit Teilchengröße zwischen 500 und 2000 µm gemäß Vergleichbsp. 1 | 0 | 25 | 0 |
| Zinkoxid | 2 | 2 | 2 |

| *auf der Walze zugemischt:* | | | |
|---|---|---|---|
| Bis-(tert.butyl-peroxiisopropyl)benzol Perkadox 14/40 B (Akzo) | 5 | 5 | 5 |

Die Kautschukmischungen wurden anschließend 15 Minuten bei 180° C vulkanisiert. Es wurden folgende Vulkanisateigenschaften gefunden:

| | **Vergleich 5-A** | **Vergleich 5-B** | **Beispiel 5.1** |
|---|---|---|---|
| *Vulkanisateigenschaften:* | | | |
| Spannungswert bei 300 % Dehnung (MPa) | 9,9 | 5,5 | 11,6 |
| Zugfestigkeit (MPa) | 32,5 | 7,1 | 25,6 |
| Bruchdehnung (%) | 534 | 396 | 417 |
| Härte bei 23° C (Shore A) | 59 | 63 | 65 |
| Rückprallelastizität bei 70° C (%) | 60 | 59 | 60 |
| Abrieb DIN 53 516 (ccm) | 62 | 104 | 50 |
| Dichte (g/ccm) | 1,073 | 1,028 | 1,032 |

### Beispiel 6 Kautschukvulkanisate

Die folgenden Kautschukmischungen wurden in einem 1,5 l Kneter hergestellt. Drehzahl 50 UpM, Mischdauer 5 Minuten, Starttemperatur 50°C. Zinkoxid wurde zum Schluss auf einer Walze (Walzentemperatur: 20° C) zugemischt.

| | **Vergleich 6-A** | **Beispiel 6.1** |
|---|---|---|
| *im Kneter gemischt:* | | |
| Brombutylkautschuk | | |
| Polysar Brombutyl X2 (Bayer AG) | 100 | 0 |
| Brombutyl / Polyharnstoff-Mischung gemäß Beispiel 4 | 0 | 150 |
| Ruß Corax N 550 (DegussaHüls AG) | 50 | 0 |
| Stearinsäure | 1 | 1 |

| *auf der Walze zugemischt:* | | |
|---|---|---|
| Zinkoxid aktiv (Bayer AG) | 5 | 5 |

Die Kautschukmischungen wurden anschließend 10 Minuten bei 180°C vulkanisiert. Es wurden folgende Vulkanisateigenschaften gefunden:

| | **Vergleich 6-A** | **Beispiel 6.1** |
|---|---|---|
| *Vulkanisateigenschaften:* | | |
| Spannungswert bei 100 % Dehnung (MPa) | 1,1 | 2,8 |
| Bruchdehnung (%) | 511 | 255 |
| Härte bei 23° C (Shore A) | 49 | 61 |
| Rückprallelastizität bei 23° C (%) | 12 | 14 |
| Rückprallelastizität bei 70° C (%) | 41 | 56 |
| Dichte (ccm) | 1,139 | 1,061 |

### Beispiel 7 Kautschukvulkanisate

Die folgenden Kautschukmischungen wurden in einem 1,5 l Kneter hergestellt. Drehzahl 50 UpM, Mischdauer 5 Minuten, Starttemperatur 50°C. Das Peroxid wurde zum Schluss auf einer Walze (Walzentemperatur: 20°C) zugemischt. Die angegebenen Mengen beziehen sich auf Gewichtsteile:

| | **Vergleich 7.A** | **Beispiel 7.1** |
|---|---|---|
| *im Kneter gemischt:* | | |
| HNBR-Kautschuk Therban 3406 (Bayer AG) | 100 | 44 |
| HNBR / Polyharnstoff-Mischung gemäß Beispiel 2 | 0 | 75 |
| Ruß Thermax N 990 (R.T. Vanderbilt) | 55 | 55 |
| MgO Maglite DE (Nordmann&Rassmann) | 5 | 5 |
| Vulkanox ZMB2 (Bayer AG) | 0,4 | 0,4 |
| Zinkoxid | 2,5 | 2,5 |
| Rhenofit DDA-70 (Rheinchemie) | 1,1 | 1,1 |
| Stearinsäure | 1 | 1 |
| Weichmacher Plasthall P-670 (C.P. Hall) | 5 | 5 |
| Weichmacher Hallco C-491 (C.P. Hall) | 6 | 6 |

| *auf der Walze zugemischt:* | | |
|---|---|---|
| Peroxid Polydispersion T D-40P VC (Rheinchemie) | 10,5 | 10,5 |
| m-Phenylen-bismaleinimid HVA-2 (DuPont) | 2 | 2 |

Die Kautschukmischungen wurden anschließend 15 Minuten bei 180° C vulkanisiert. Es wurden folgende Vulkanisateigenschaften gefunden:

| | **Vergleich 7.A** | **Beispiel 7.1** |
|---|---|---|
| *Vulkanisateigenschaften:* | | |
| Spannungswert bei 100 % Dehnung (MPa) | 2,4 | 3,7 |
| Spannungswert bei 300 % Dehnung (MPa) | 7,6 | 12,1 |
| Zugfestigkeit (MPa) | 13,3 | 18,2 |
| Bruchdehnung (%) | 278 | 259 |
| Härte bei 23° C (Shore A) | 59 | 68 |
| Abrieb DIN 53 516 (ccm) | 71 | 64 |

Die Vulkanisate wurden anschließend 14 Tage bei 150° C gelagert. Es ergaben sich folgende Änderungen in den mechanischen Eigenschaften:

| | **Vergleich 7.A** | **Beispiel 7.1** |
|---|---|---|
| *Vulkanisateigenschaften nach Lagerung 14 d*/ *150° C* | | |
| Spannungswert bei 100% Dehnung | 4,7 | 7,0 |
| Zugfestigkeit (MPa) | 16,1 | 19.0 |
| Bruchdehnung (%) | 260 | 240 |
| Härte bei 23° C (Shore A) | 72 | 79 |

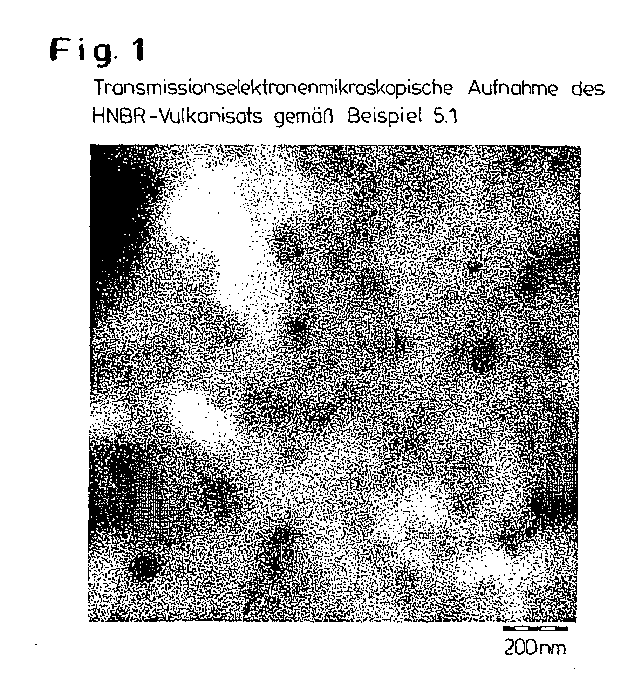

## Patentansprüche

1. Kautschukmischungen bestehend aus einem Kautschuk und 1 bis 300 Gew.-Teilen, bezogen auf 100 Gew.-Teile Kautschuk, eines Polyharnstoff-Füllstoffs mit einer Teilchengröße von 0,001 bis 500 µm und gegebenenfalls weiteren Kautschukhilfsmitteln und Vernetzern.

2. Kautschukmischungen nach Anspruch 1, **dadurch gekennzeichnet, dass** die Kautschukmischungen 5 bis 150 Gew.-Teile Polyharnstoff-Füllstoffe, bezogen auf 100 Gew.-Teile Kautschuk, enthalten.

3. Verfahren zur Herstellung der Polyharnstoff-gefüllten Kautschukmischungen nach Anspruch 1, **dadurch gekennzeichnet, dass** man ein Polyisocyanat mit einem Polyamin und/oder Wasser bei Temperaturen von -100° bis 250° C in einem Lösungsmittel unter Ausfällung des Polyharnstoffs umsetzt, den erhaltenen Polyharnstoff mit einer Lösung eines Kautschuks vermischt und das Lösungsmittel entfernt.

4. Verfahren nach Anspruch 3, **dadurch gekennzeichnet, dass** man die Umsetzung des Polyisocyanats mit dem Polyamin in einer Lösung eines Kautschuks oder in einer Emulsion aus Kautschuklösung und Wasser durchführt.

5. Verfahren nach Anspruch 3, **dadurch gekennzeichnet, dass** die Mengenverhältnisse von eingesetztem Polyisocyanat zu eingesetztem Polyamin bei 0,7 bis 1,3 Mol Isocyanatgruppe pro Mol Aminogruppe liegt und das Wasser gegebenenfalls in großem Überschuß eingesetzt wird.

6. Verwendung der Kautschukmischungen nach Anspruch 1 zur Herstellung von Formkörpern und Vulkanisaten, insbesondere zur Herstellung von technischen Gummiartikeln und Reifen.

7. Vulkanisate, insbesondere technische Gummiartikel und Reifen, erhältlich unter Verwendung von Kautschukmischungen nach Anspruch 1.

## Claims

1. Rubber mixtures comprising a rubber and from 1 to 300 parts by weight, based on 100 parts by weight of rubber, of a polyurea filler with a particle size of 0.001 to 500 µm and optionally other rubber auxiliaries and crosslinking agents.

2. Rubber mixtures according to Claim 1, **characterized in that** the rubber mixtures comprise 5 to 150 parts by weight of polyurea fillers, based on 100 parts by weight of rubber.

3. Process for preparing polyurea-filled rubber mixtures according to Claim 1, **characterized in that** a polyisocyanate is reacted with a polyamine and/or water at temperatures of -100° to 250°C in a solvent with precipitation of the polyurea, and the polyurea obtained is mixed with a solution of a rubber and the solvent is removed.

4. Process according to Claim 3, **characterized in that** the reaction of the polyisocyanate with the polyamine is carried out in a solution of a rubber or in an emulsion of rubber solution and water.

5. Process according to Claim 3, **characterized in that** the quantitative proportions of polyisocyanate used to polyamine used are 0.7 to 1.3 mol of isocyanate group per mole of amino group and the water is optionally used in large excess.

6. Use of the rubber mixtures according to Claim 1 for the production of mouldings and vulcanizates, in particular for the production of industrial rubber articles and tyres.

7. Vulcanizates, in particular industrial rubber articles and tyres, obtainable using rubber mixtures according to Claim 1.

## Revendications

1. Compositions de caoutchouc consistant en un caoutchouc et 1 à 300 parties en poids, pour 100 parties en poids du caoutchouc, d'une matière de charge consistant en une polyurée à une dimension de particule de 0,001 à 500 µm, avec le cas échéant d'autres produits auxiliaires pour caoutchouc et agents réticulants.

2. Compositions de caoutchouc selon la revendication 1, **caractérisées en ce qu'**elles contiennent de 5 à 150 parties en poids de la polyurée servant de matière de charge pour 100 parties en poids du caoutchouc.

3. Procédé pour la préparation des compositions de caoutchouc chargées en polyurée selon la revendication 1, **caractérisé en ce que** l'on fait réagir un polyisocyanate avec une polyamine et/ou de l'eau à des températures allant de -100 à +250°C dans un solvant, la réaction s'accompagnant d'une précipitation de la polyurée que l'on mélange ensuite avec une solution du caoutchouc, après quoi on élimine le solvant.

4. Procédé selon la revendication 3, **caractérisé en ce que** la réaction entre le polyisocyanate et la polyamine est réalisée dans une solution d'un caoutchouc ou dans une émulsion consistant en une solution de caoutchouc et de l'eau.

5. Procédé selon la revendication 3, **caractérisé en ce que** les proportions relatives entre le polyisocyanate mis en oeuvre et la polyamine mise en oeuvre sont de 0,7 à 1,3 mol de groupe isocyanate par mole de groupe amino et **en ce que** l'eau est le cas échéant mise en oeuvre en gros excès.

6. Utilisation des compositions du caoutchouc selon la revendication 1 pour la fabrication d'objets moulés et vulcanisats, en particulier pour la fabrication d'articles industriels en caoutchouc et de pneumatiques.

7. Vulcanisats, en particulier articles industriels en caoutchouc et pneumatiques, obtenus à partir des compositions de caoutchouc selon la revendication 1.
